# EUROPÄISCHE PATENTSCHRIFT

(11) **EP 3 120 969 B1**
(45) Veröffentlichungstag und Bekanntmachung des Hinweises auf die Patenterteilung: **21.02.2018**
(21) Anmeldenummer: 15177643.2
(22) Anmeldetag: 21.07.2015
(51) Int. Cl.: B23P 19/02, B25B 27/02, B25B 27/04, B60B 35/08

(54) **MOBILE ACHSENPRESSE**
MOBILE AXLE PRESS
PRESSE MOBILE POUR ESSIEUX

(43) Veröffentlichungstag der Anmeldung: 25.01.2017
(73) Patentinhaber: Ebner, Andreas Walter, 93349 Mindelstetten (DE); Ebner, Joachim Heinz, 70372 Stuttgart (DE)
(72) Erfinder: Ebner, Andreas Walter, 93349 Mindelstetten (DE); Ebner, Joachim Heinz, 70372 Stuttgart (DE)
(74) Vertreter: Grünecker Patent- und Rechtsanwälte PartG mbB

(56) Entgegenhaltungen:
- US-B1- 6 813 816
- DATABASE WPI Week 201179 Thomson Scientific, London, GB; AN 2011-P53358 XP002753176, -& CN 202 015 933 U (JIANGXI JIANGLING CHASSIS CO LTD) 26. Oktober 2011 (2011-10-26)
- DATABASE WPI Week 201517 Thomson Scientific, London, GB; AN 2015-15740F XP002753177, -& CN 104 289 895 A (ZHUCHENG YIHE CAR AXLE CO LTD) 21. Januar 2015 (2015-01-21)
- DATABASE WPI Week 201110 Thomson Scientific, London, GB; AN 2011-A13985 XP002753178, -& CN 201 659 400 U (CHANGCHUN CNC MACHINE TOOL CO LTD) 1. Dezember 2010 (2010-12-01)

## Beschreibung

Die Erfindung betrifft eine mobile Achsenpresse zum Lösen oder Einpressen eines Achsstummels in eine Hohlachse.

### Stand der Technik

Die Achsen von beispielsweise Wohnwagen oder Anhängern oder anderen nicht angetriebenen Wagen werden häufig von einer Hohlachse gebildet, in die auf jeder Seite des Wagens jeweils ein Achsstummel eingepresst ist. An diesem Achsstummel wird drehbar jeweils ein Rad gelagert. Die Hohlachse und der Achsstummel können ein rechteckiges oder quadratisches oder auch anders geformtes Profil haben und sind zueinander um 90° verdreht. Um eine gewisse Flexibilität der Verbindung zu erreichen, sind zusätzlich zum Achsstummel den Achsstummel umgebende, elastische Elemente, beispielsweise aus Gummi, in die Hohlachse eingepresst. Die elastischen Elemente verschleißen mit der Zeit. Um diese zu wechseln oder auch um beschädigte Achsstummel auswechseln zu können, werden üblicherweise stationäre Achsenpressen verwendet. Diese können die Achsstummel aus der Hohlachse lösen. Dazu wird die Hohlachse vom Rest des Wagens getrennt, in die Achsenpresse verbracht und fixiert. Anschließend wird auf den Achsstummel eine Kraft ausgeübt, um diesen aus der Hohlachse zu lösen. Analog kann in die Hohlachse ein Achsstummel zusammen mit den entsprechenden elastischen Elementen eingepresst werden.

Die bisherigen Achsenpressen erfordern jedoch das Lösen der Hohlachse vom übrigen Wagen, sodass mit dem Auswechseln eines Achsstummels erhebliche Montagearbeiten am Wagen nötig sind. Eine solche Achsenpresse ist aus der CN202015933 U bekannt.

### Aufgabe

Ausgehend von diesem Stand der Technik ist es daher Aufgabe der vorliegenden Erfindung, eine Achsenpresse anzugeben, mit der der Wechsel der Achsstummel zeitlich effizient durchgeführt werden kann und Montagearbeiten am Wagen reduziert werden können.

### Lösung

Diese Aufgabe wird durch die mobile Achsenpresse gemäß unabhängigem Anspruch 1 gelöst. Vorteilhafte Weiterbildungen der Erfindung werden in den Unteransprüchen beschrieben.

Die erfindungsgemäße mobile Achsenpresse umfasst einen unter den Wagen fahrbaren Rahmen mit einer mit dem Achsstummel koppelbaren Auszugseinheit, die eine Kraft in Längsrichtung der Hohlachse auf den Achsstummel ausüben kann, um den Achsstummel in die Hohlachse einzupressen oder aus der Hohlachse zu lösen und weiterhin ein Gegenlager zum Abstützen der Achsenpresse gegen den Wagen Achsauflagen.

Aufgrund der Mobilität kann die Achsenpresse unter einen Wagen geschoben und die Achsstummel aus der Hohlachse gelöst oder in diese eingepresst werden, ohne dass die Hohlachse zunächst vom Wagen gelöst werden muss. Dabei stützt sich die Presse mit Gegenlagern z.B. am Rahmen und/oder der Achse des Wagens ab, wenn die Auszugs- bzw. Einpresskraft aufgebracht wird. Die Presse kann also nicht verrutschen und der Montagevorgang einfach und zuverlässig durchgeführt werden. Insgesamt können somit aufwändige Montagearbeiten am Wagen selbst vermieden werden.

In einer Ausführungsform ist vorgesehen, dass die Achsenpresse einen Hydraulikzylinder zum Bewegen der Auszugseinheit umfasst. Mittels eines Hydraulikzylinders kann eine ausreichend große Kraft über die Auszugseinheit auf den Achsstummel ausgeübt werden, um diesen aus der Hohlachse zu lösen oder in diese einzupressen.

In einer anderen Ausführungsform kann diese Aufgabe ein elektrischer Antrieb lösen. Auch andere Antriebe sind hier denkbar.

Vorteilhaft umfasst die Auszugseinheit eine Klammer, die durch Öffnen und Schließen an dem herauszuziehenden oder einzudrückenden Achsstummel, z.B. an einem Hinterschnitt oder einer Vertiefung, angesetzt werden kann. Dann kann die Auszugseinheit in Längsrichtung der Hohlachse des Wagens bewegt und der Achstummel herausgezogen bzw. hineingedrückt werden. Neben einer Klammer sind grundsätzlich auch andere Formelemente oder Halteelemente denkbar.

In einer Weiterbildung dieser Ausführungsform ist der elektrische Antrieb an ein externes Stromnetz anschließbar und/oder es ist eine eigenständige Stromversorgung, z.B. ein Batterieblock, auf der Presse selbst angeordnet.

In einer weiteren Ausführungsform ist vorgesehen, dass das Gegenlager auf unterschiedliche Größen von Wagen angepasst werden kann. So kann die mobile Achsenpresse auch für verschieden breite Wagen verwendet werden, was die Einsetzbarkeit erhöht.

In einer Weiterbildung dieser Ausführungsform ist vorgesehen, dass das Gegenlager einen beweglichen Befestigungsschlitten und einen Fixierblock umfasst, wobei der Befestigungsschlitten beweglich gegenüber dem Fixierblock ausgebildet ist und zumindest ein Teil des Wagens zwischen dem Befestigungsschlitten und dem Fixierblock eingespannt werden kann. Dies erlaubt eine einfache mechanische Anpassung der mobilen Achsenpresse und insbesondere des Gegenlagers auf verschieden große Wagen.

In einer alternativen Ausführungsform ist vorgesehen, dass das Gegenlager zwei bewegbare Achsauflagen umfasst, über die die Presse am Rahmen eines Wagens eingespannt werden kann.

In einer weiteren Ausführungsform ist vorgesehen, dass der bewegliche Befestigungsschlitten durch einen elektrischen Antrieb antreibbar ist und der Antrieb mit einer externen Stromversorgung verbunden ist und/oder dem Antrieb eine eigenständige Stromversorgung zugeordnet ist. Die Einstellung der Achsauflagen bzw. Befestigungsschlitten kann so elektrisch erfolgen, was den manuellen Kraftaufwand reduziert.

Die Achsenpresse weist außerdem vorzugsweise eine Hubeinrichtung zum Anheben des Rahmens auf. Insbesondere bei der Verwendung der Achsenpresse für unterschiedliche Größen von Wagen kann es erforderlich sein, die Höhe des Rahmens anzupassen, da bei unterschiedlich großen Wagen auch die Lage der Hohlachse variieren kann.

Insbesondere kann vorgesehen sein, dass eine minimale Unterfahrhöhe, mit der die Achsenpresse unter einen Wagen bewegt werden kann, maximal 60 cm, bevorzugt 50 cm, besonders bevorzugt weniger als 45 cm beträgt. Dabei ist die Unterfahrhöhe definiert über die maximale Höhe eines Teils der Achsenpresse, das bei der für den Betrieb der Achsenpresse notwendigen Positionierung unter dem Wagen tatsächlich unter dem Wagen positioniert wird. So können andere Teile der Achsenpresse durchaus eine Höhe aufweisen, die größer als die Unterfahrhöhe ist, sofern diese nicht beim Positionieren der Achsenpresse unter den Wagen bewegt werden müssen.

Dabei kann die Unterfahrhöhe der Achsenpresse veränderbar sein. Sie kann so auch an unterschiedlich hohe Wagen angepasst werden.

Es kann ferner vorgesehen sein, dass nur eine Auszugseinheit vorgesehen ist, die wahlweise von der einen oder der anderen Seite her in den Rahmen eingeschoben werden kann, es können aber auch zwei oder mehrere, jeweils auf einer Seite angeordnete Einheiten vorgesehen sein. Dann könnten auch zeitgleich Achsstummel auf beiden Seiten der Hohlachse gelöst oder eingepresst werden.

### Kurze Beschreibung der Figuren

- Figur 1a und b: schematische Darstellungen einer erfindungsgemäßen mobilen Achsenpresse in einer perspektivischen Darstellung (Fig. 1a) und einer seitlichen Ansicht. (Fig. 1b)
- Figur 2: eine schematische Darstellung der Achsauflage in vergrößerter Ansicht
- Figur 3: eine schematische Darstellung der unter einen Wagen geschobenen erfindungsgemäßen Achsenpresse
- Figur 4a und b: schematische Darstellungen der Positionierung der Achsenpresse unter einem Wagen in abgesenkter Position (Fig. 4a) und in angehobener Position (Fig. 4b)

### Ausführliche Beschreibung

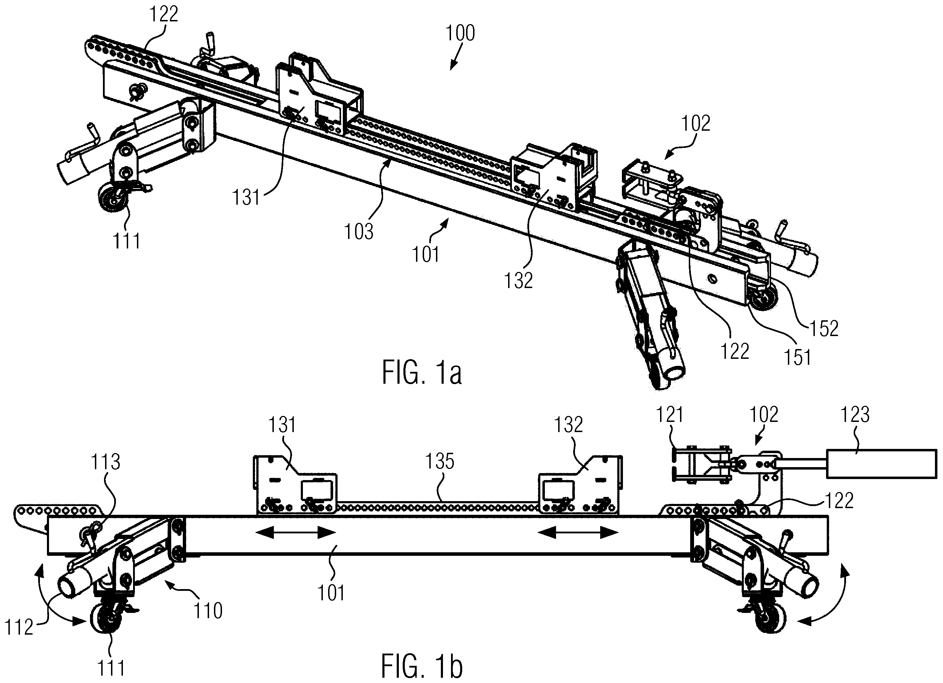

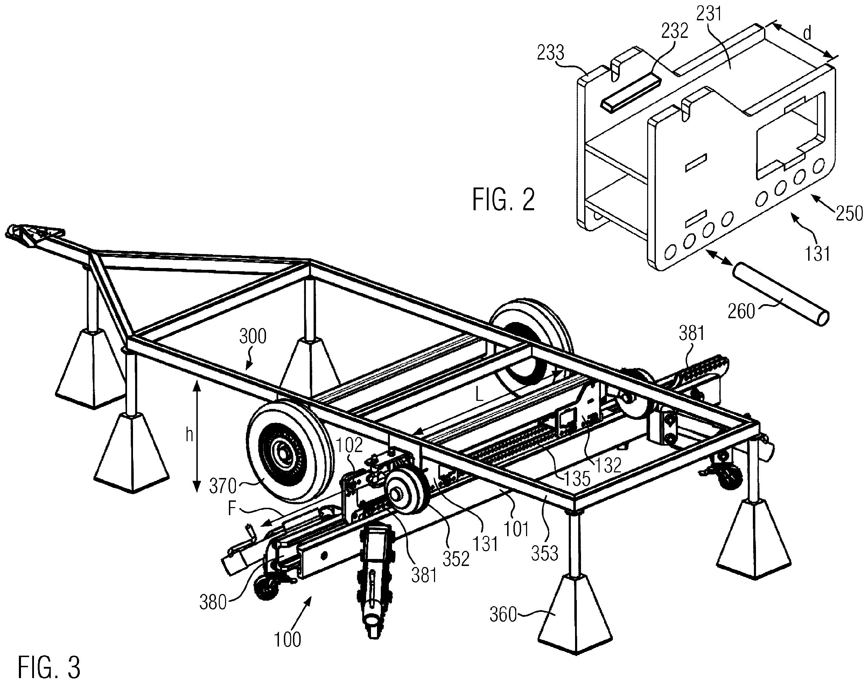

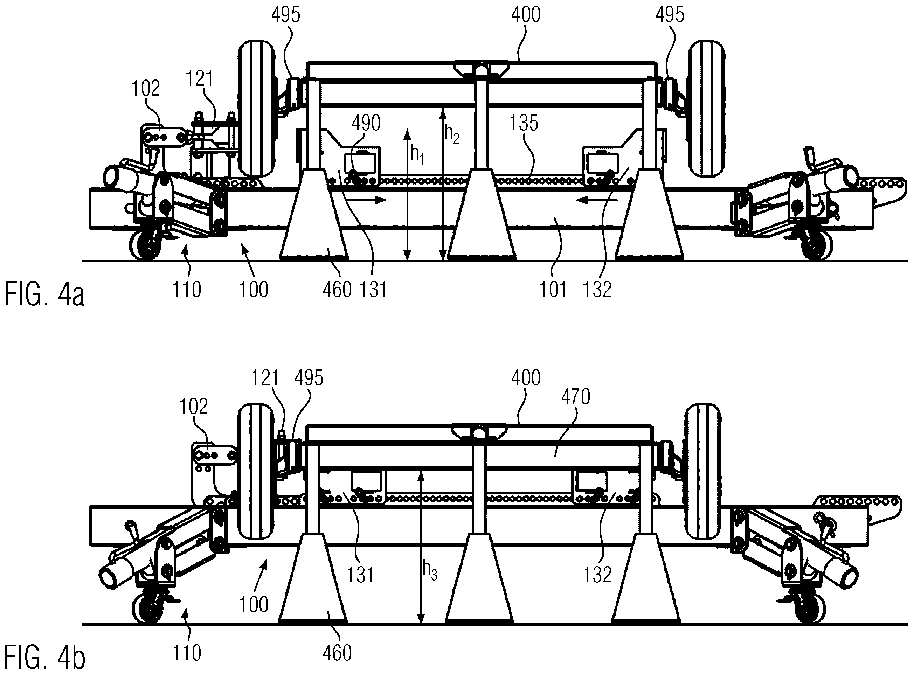

Figur 1a zeigt eine mobile Achsenpresse 100 gemäß einer Ausführungsform der Erfindung in perspektivischer Ansicht. Die Achsenpresse 100 umfasst erfindungsgemäß einen Rahmen 101 und kann mittels Rollen 111 oder Schienen beweglich ausgebildet sein, sodass sie unter einen Wagen, wie beispielsweise einen Wohnwagen oder einen Anhänger, bewegt werden kann. Dies wird genauer in den Figuren 3 und 4 beschrieben.

Der Rahmen 101 kann beispielsweise von zwei aufeinander zu weisenden C-Trägern 151, 152 gebildet werden, die zueinander beanstandet und miteinander verbunden sind, oder z.B. von einem liegenden U-Träger gebildet sein. In dem Zwischenraum zwischen den Trägern bzw. im Raum innerhalb des U-Trägers können weitere Bestandteile der Achsenpresse 100 integriert sein.

Die Achsenpresse umfasst eine Auszugseinheit 102, die mit einem Achsstummel verbunden werden kann. Weiterhin ist die Auszugseinheit 102 derart ausgebildet, dass sie eine Kraft auf den Achsstummel ausüben kann, um diesen entweder in eine Hohlachse eines Wagens einzupressen oder aus dieser Hohlachse zu lösen. Dazu ist die Auszugseinheit 102 beweglich in dem Rahmen gelagert.

Da üblicherweise die Achsstummel über Gummilager und/oder Gummistränge in der Hohlachse eingepresst gelagert sind, sind erhebliche Kräfte notwendig, um die Achsstummel in die Hohlachse hineinzudrücken oder aus der Hohlachse zu lösen. Um zu verhindern, dass sich die Achsenpresse beim Herausziehen des Achsstummels relativ zum Wagen bewegt, ist wenigstens ein Gegenlager 103 mit zwei Achsauflagen 131, 132 vorgesehen, mit dem die Achsenpresse gegen den Wagen, insbesondere gegen den Rahmen abgestützt werden kann. So kann eine Bewegung der mobilen Achsenpresse in Auszugsrichtung oder Einpressrichtung des Achsstummels gegenüber dem Wagen verhindert werden.

In einer Ausführungsform kann die Auszugseinheit 102 auf beiden Seiten des Rahmens 101 vorgesehen sein, um beidseitig Achsstummel aus einer Hohlachse eines Wagens zu lösen. Alternativ kann auch vorgesehen sein, dass die Auszugseinheit 102 vom Rahmen 101 gelöst werden und von einer Seite auf die andere verbracht werden kann. Die Auszugseinheit 102 ist gegenüber dem Rahmen beweglich gelagert. Dazu kann die Auszugseinheit 102 entweder ein Gleitelement 122 umfassen oder mit einem Gleitelement verbunden sein. Dieses Gleitelement ist beweglich in dem Rahmen 101 gelagert, beispielsweise auf einer zwischen den Trägern 151, 152 angeordneten Schiene, sodass eine Bewegung der Auszugseinheit 102 relativ zum Rahmen möglich ist, um den Achsstummel aus der Hohlachse zu lösen oder in diese hinein zu pressen. Möglich ist hier eine Lagerung des Gleitelements in der Schiene mittels Kugellagern. Jedoch können auch andere, insbesondere auch mechanische Lager zum Einsatz kommen

Die Auszugseinheit 102 kann lösbar mit dem Gleitelement 122 verbunden sein. Dazu kann die Auszugseinheit ein oder mehrere Löcher umfassen und/oder im Gleitelement eine Lochreihe vorgesehen sein. Die Auszugseinheit kann dann gegenüber dem Gleitelement in Längsrichtung des Rahmens versetzt werden und beispielsweise mittels eines Bolzens mit dem Gleitelement verbunden werden. Damit kann die Anfangsposition der Auszugseinheit in Bezug auf den Rahmen verstellt werden, um beispielsweise den Angriffspunkt an dem Achsstummel einzustellen. Anstelle der Lochreihe sind auch andere Ausführungsformen denkbar, die eine Rasterung/Einstellung der Position der Auszugseinheit 102 bezüglich des Gleitelements ermöglichen.

Figur 1b zeigt die mobile Achsenpresse aus Figur 1a in einer Seitenansicht. In Figur 1b ist zu erkennen, dass die Auszugseinheit 102 eine Klammer 121 umfasst. Diese Klammer kann mit dem Achsstummel verbunden werden, sodass über die Klammer eine Kraft auf den Achsstummel zum Einpressen oder Lösen aus der Hohlachse ausgeübt werden kann. Dazu kann die Klammer geöffnet werden und geeignet am Achsstummel so angesetzt werden, dass beim Ausüben einer Kraft auf die Klammer in Längsrichtung der Hohlachse die Klammer nicht gegenüber dem Achsstummel verrutscht.

Die Klammer ist nur eine beispielhafte Ausführungsform. Anstelle der Klammer können auch andere Arten der Verbindung der Auszugseinheit mit dem Achsstummel vorgesehen sein. So können Formelemente genutzt werden, die eine form- und/oder kraftschlüssige Verbindung der Auszugseinheit mit dem Achsstummel ermöglichen. Weiterhin können auch Seile genutzt werden, um den Achsstummel mit der Auszugseinheit zu verbinden.

Die Auszugseinheit 102 kann weiterhin einen Hydraulikzylinder 123 umfassen. Der Hydraulikzylinder muss nicht Teil der Auszugseinheit 102 sein. Die Auszugseinheit 102 ist mit dem Hydraulikzylinder verbindbar und kann gegenüber dem Gegenlager 103 bewegt werden. Der Hydraulikzylinder kann beispielsweise im Rahmen 101, etwa zwischen den Trägern 151, 152, angeordnet sein. Er kann aber auch außerhalb der Achsenpresse angeordnet und mit der Auszugseinheit verbindbar sein.

Der Hydraulikzylinder 123 ist mit einer Hydraulikpumpe für Hydraulikmedium verbunden. Die Hydraulikpumpe kann dabei mit einem Elektromotor antreibbar sein, der z.B. mit einem externen Stromnetz zur Stromversorgung verbindbar ist. Um die Einsatzmöglichkeiten der Achsenpresse zu erhöhen, kann der Elektromotor, die Hydraulikpumpe und der Hydraulikzylinder aber auch auf der Achsenpresse angeordnet sein und eine interne Stromversorgung, beispielsweise über eine Batterie, die auf der Achsenpresse vorgesehen ist, versorgt werden.

Neben dem möglichen Antrieb durch einen Elektromotor und eine interne oder externe Stromversorgung sind auch andere Varianten denkbar. So kann der nötige hydraulische Druck auch durch manuelle Betätigung des Hydraulikzylinders erfolgen. Weiterhin können auch andere Vorrichtungen zum Erzeugen des hydraulischen Drucks genutzt werden, wie sie beispielsweise in Fahrzeugen genutzt werden.

An Stelle des Hydraulikzylinders kann auch jede andere Einrichtung eingesetzt werden, die geeignet ist, eine entsprechende Kraft auf die Auszugseinheit 102 bzw. die Klammer 121 auszuüben. So könnte z.B. auch ein Elektromotor zum Einsatz kommen. Dieser kann auf der Achsenpresse angeordnet sein. Die Stromversorgung für den Elektromotor kann entweder über Batterien auf der Achsenpresse (interne Stromversorgung) oder über einen Anschluss an ein externes Stromnetz oder auf sonstige Art bereitgestellt werden.

Die Achsauflagen 131, 132 des Gegenlagers 103 sind vorzugsweise ebenfalls beweglich auf dem Rahmen 101 angeordnet. Dabei müssen nicht beide Achsauflagen beweglich angeordnet sein, vielmehr genügt es, wenn eine Achsauflage entlang des Rahmens bewegbar bzw. versetzbar ist und die andere Achsauflage als Fixierblock ausgebildet, also unbeweglich gegenüber dem Rahmen ist. Durch Einstellung des Abstands der Achsauflagen 131, 132 zueinander kann die Achsenpresse auf unterschiedliche Größen von Wagen oder Anhängern angepasst werden.

Weiterhin sind in der in Figur 1b dargestellten Ausführungsform Parallelogramm-Stützen 110 für den Rahmen 101 vorgesehen. Die Stützen 110 sind beweglich am Rahmen angelenkt und können beispielsweise Rollen 111 oder Kufen umfassen, um auf dem Boden einer Halle oder ähnlichem bewegt zu werden. Über die Parallellogrammaufhängung (Doppelschwinge) lassen sich größere Kräfte eintragen bzw. abstützen.

Neben den Parallellogrammstützen können auch andere Stützen zum Einsatz kommen. Beispielsweise können vier voneinander unabhängige Stützen verwendet werden. Diese können einen zueinander und zum Träger veränderbaren Abstand aufweisen, um die Größe der Auflagefläche zu verändern und so eine stabile Positionierung der Achsenpresse zu ermöglichen. Ferner ist es vorteilhaft, wenn die Stützen höhenverstellbar, insbesondere unabhängig voneinander höhenverstellbar ausgebildet sind.

Da die maximale Unterfahrhöhe für die mobile Achsenpresse durch den Wagen selbst bestimmt wird (Höhe des Freiraums vom Boden bis zum Wagen), kann es notwendig sein, die Unterfahrhöhe der mobilen Achsenpresse und insbesondere der Teile, die bei der Positionierung der Achsenpresse tatsächlich unter den Wagen bewegt werden müssen, zu ändern. Dazu kann die Parallellogrammaufhängung genutzt werden. Eine der Streben jeder Stützte kann einen Zylinder und eine darin angeordnete Spindel 112 umfassen. Mittels einer Kurbel 113 oder eines anderen manuellen oder hydraulischen, elektrischen oder sonstigen Antriebs zur Höhenverstellung kann die Spindel in Richtung des Wagens oder von diesem weg bewegt werden, sodass sich der Winkel zwischen den Stützen 110 und dem Rahmen 101 verändern lässt. Dadurch kann die Höhe des Rahmens beeinflusst werden.

In einer Ausführungsform ist vorgesehen, dass die Achsenpresse vier Stützen 110 umfasst, die sämtlich vorzugsweise unabhängig voneinander gegenüber dem Rahmen 101 bewegt und in einem Winkel von 40° bis 60° zum Rahmen verlaufend am Rahmen angeordnet sind. Wegen der individuellen Verstellbarkeit kann die Achsenpresse auch dann angesetzt werden, wenn der Rahmen des Wagens nicht horizontal zum Boden, auf dem er steht, verläuft.

Die Figur 2 zeigt eine der Achsauflagen 131 in detaillierterer Ansicht. Die Achsauflage umfasst eine Auflagefläche 231, auf der eine Hohlachse eines Wagens aufgelegt werden kann. Die Auflagefläche 231 hat eine Breite d, die so groß gewählt wird, dass möglichst alle handelsüblichen Hohlachsen auf die Auflagefläche aufgelegt werden können. Die Auflagefläche wird durch zwei senkrecht dazu verlaufende Seitenwangen mit Erhebungen 233 begrenzt. Zwischen diesen Erhebungen kann eine Hohlachse auf der Auflagefläche positioniert werden.

Um eine zusätzliche Absicherung der Hohlachse gegen ein vertikales Abheben von der Achsauflage zu ermöglichen, kann vorgesehen sein, dass die Hohlachse auf der, der Auflagefläche 231 gegenüberliegenden Seite zusätzlich mit beispielsweise einem Riemen fixiert werden kann. Dazu können die Achsauflagen eine Öffnung umfassen, durch die ein Riemen oder Bolzen geschoben werden kann. Die Hohlachse kann so von der Auflagefläche auf der einen Seite und dem Riemen oder Bolzen auf der anderen Seite an einer vertikalen Bewegung vorzugsweise vollständig, aber zumindest teilweise gehindert werden. Alternativ kann auch eine Klammer oder ein Formstück verwendet werden, das um die gesamte Hohlachse umgelegt und mit der Achsauflage verbunden werden kann, sodass eine vertikale Bewegung der Hohlachse beim Einpressen oder Lösen des Achsstummels verhindert werden kann.

Da die Durchmesser von Hohlachsen bei unterschiedlichen Wägen nicht genormt sind, also nicht alle denselben Wert aufweisen, ist vorgesehen, können Distanzstücke (Adapter oder Formstücke) 232 links und/oder rechts der Auflagefläche seitlich an den Erhebungen der Achsauflage eingelegt werden . Durch die Adapter 232 wird die nutzbare Breite d der Auflagefläche begrenzt, sodass weniger breite Hohlachsen darauf positioniert werden können, ohne gegenüber der Achsauflage seitlich zu verrutschen. Die Erhebungen 233 der Achsauflage können die Achsenpresse gegen eine Verstrebung/Rahmen eines Wagens abstützen, sodass eine auf einen Achsstummel in der Hohlachse einwirkende Kraft nicht zu einer Bewegung der Achsenpresse gegenüber dem Wagen führt.

Weiterhin kann die Achsauflage 131 an der der Auflagefläche gegenüber liegenden Seite ein oder mehrere Löcher umfassen. Diese Löcher können genutzt werden, um die Achsauflage beispielsweise gegenüber einer Lochschiene der Achsenpresse mittels des Bolzens 260 zu fixieren. Neben der Lochschiene sind auch andere Ausführungsformen denkbar, die eine Positionierung und Fixierung der Achsauflage gegenüber der Achsenpresse ermöglichen.

Figur 3 zeigt die mobile Achsenpresse 100 in einer Position unter einem Wagen 300. Der Wagen 300 ist hier nur als Rahmen dargestellt. Beim Einsatz einer erfindungsgemäßen Achsenpresse ist es nicht mehr notwendig, den Rahmen vom Rest des Wagens, beispielsweise vom Wohnwagen zu trennen.

Zum Wechseln der verschlissenen, üblicherweise elastischen Lager (beispielsweise aus Gummi oder Gummisträngen), die zusammen mit dem Achsstummel in der Hohlachse eingepresst sind und den Achsstummel in dieser fixieren, kann der Wagen bzw. der Rahmen 300 auf mehrere Böcke 360 aufgebockt werden, sodass die Räder 370 den Boden nicht mehr berühren und der Wagen nicht wegrollen kann. Die Unterseite des Rahmens 353 definiert dabei dann eine Unterfahrhöhe h zum Boden, auf dem der Wagen 300 aufgestellt ist. Wie bereits mit Bezug auf Figur 1b beschrieben, kann die Unterfahrhöhe der Achsenpresse an diese maximale Unterfahrhöhe h angepasst werden. Für heute übliche Anhänger ist es besonders bevorzugt, wenn die minimale Unterfahrhöhe der Achsenpresse maximal 60 cm, bevorzugt maximal 50 cm, besonders bevorzugt weniger als 45 cm beträgt. Dann ist es nicht nötig, den Wagen 300 maßgeblich vom Boden anzuheben, sodass beispielsweise auf Hebebühnen verzichtet werden kann. So können anstelle der hier nur schematisch dargestellten Böcke auch ein order mehrere Wagenheber oder sonstige Geräte und Vorrichtungen zum Einsatz kommen, um den Wagen 300 zumindest so weit vom Boden anzuheben, dass die Achsenpresse unter den Wagen gefahren werden kann.

In Figur 3 ist die Achsenpresse soweit angehoben, dass die Hohlachse 350 auf den Auflageflächen der Achsauflagen 131, 132 des Gegenlagers und zwischen deren Erhebungen 233 gelagert ist. Falls der Durchmesser der Hohlachse kleiner ist als die Breite der Auflagefläche der Achsauflagen, können die erwähnten Distanzstücke 232 (Adapter) eingesetzt werden, um die nutzbare Breite der Auflagefläche anzupassen, sodass die Achsenpresse bei Aufwenden der Kraft auch seitlich gegen den Wagen abgestützt wird. Die Adapter werden dabei bevorzugt so gewählt, dass die Hohlachse spielfrei oder mit möglichst wenig Spiel (beispielsweise bis 5mm) auf der Auflagefläche und zwischen den Erhebungen positioniert ist. Da eine erhebliche Anzahl Adapter nötig wäre, um für jede mögliche Hohlachse eine spielfreie Lagerung auf der Achsauflage zu ermöglichen, ist es praktikabel, nur eine beschränkte Anzahl von Adaptern bereitzustellen, wobei für eine gegebene Hohlachse dann der Adapter gewählt wird, der die Positionierung der Hohlachse auf der Achsauflage mit möglichst wenig Spiel ermöglicht.

Alternativ zu der Anzahl Adapter kann auch ein "Schraubstock" in der Achsauflage vorgesehen sein, der zwei zueinander bewegbare Backen umfasst. Die Backen sind dabei in einer zur Auflagefläche parallelen Ebene bewegbar angeordnet, wobei wenigstens eine der Backen bewegbar ausgebildet ist. Die Bewegung der Backen kann beispielsweise über eine Spindel manuell oder elektrisch, hydraulisch oder pneumatisch erfolgen. So wird ein stufenloses Einspannen der Hohlachse ermöglicht.

Da die Länge L der Hohlachse bei unterschiedlichen Wägen verschieden sein kann, sind die Achsauflagen entlang der Längsrichtung des Rahmens versetzbar bzw. beweglich. Dazu können sie auf einer Schiene 135 angeordnet sein. Auf dieser können sie dann zusätzlich über die Lochreihe z.B. mit Bolzen fixiert werden, um möglichst spielfrei die Achsenpresse gegen eine einwirkende Kraft F gegen den Wagen abzustützen. Alternativ oder zusätzlich kann beispielsweise eine Spindel vorgesehen sein, um die Achsauflagen entlang der Achsenpresse zu bewegen. So ist eine sehr genaue Anpassung der Position der Achsauflagen an unterschiedliche Längen von Hohlachsen möglich.

Genauer ist die Schiene 131 als Lochschiene ausgebildet und jede Achsauflage umfasst wenigstens ein Loch, durch das, wie in Fig. 2 beschrieben, dann der Bolzen geschoben werden kann, mit dem die Achsauflage mit der Lochschiene verbunden werden kann. Die Löcher in der Lochschiene können zueinander einen Abstand von 1 cm oder 2 cm aufweisen. Auch andere Abstände sind möglich. Ist beispielsweise die Achsenpresse nur für bestimmte Wagen konzipiert, so kann die Lochschiene Löcher entsprechend den Längen L der Hohlachsen aufweisen, sodass die Achsauflagen zuverlässig für jeden Wagen eingestellt werden können.

Um eine möglichst hohe Stabilität zu erreichen, können auch zwei parallel zueinander angeordnete Lochschienen auf dem Rahmen oder zwischen den Trägern des Rahmens angeordnet sein und die Achsauflagen beide Schienen umgreifen.

Ferner kann die Einstellung der Achsauflagen anstelle manuell über eine Auswahl des Loches in der Lochschiene und Einstecken des Bolzens auch automatisch, beispielsweise mittels eines Elektromotors, hydraulisch oder auf andere Art bewirkt werden. Dazu kann weiterhin eine Bedienvorrichtung vorgesehen sein, in der die Längen L der Hohlachsen unterschiedlicher Wägen/Wagentypen gespeichert sind und die bei Auswahl eines Wagens die Achsauflagen in die entsprechende Position verfährt.

Im dargestellten Ausführungsbeispiel sind die Achsauflagen 131,132 auf einer drehbaren Spindel, die zwischen den Trägern des Rahmens angeordnet ist, gelagert. Die Achsauflagen umfassen jeweils ein Gewinde, wobei die Gewinde entgegengesetzt drehend zueinander ausgebildet sind, sodass durch Drehung der Spindel der Abstand der Achsauflagen zueinander verändert werden kann.

Ist eine der Achsauflagen als Fixierblock, also unbeweglich gegenüber dem Rahmen, ausgebildet kann die Spindel in dieser Achsauflage drehbar gelagert sein und der Abstand der anderen Achsauflage durch Drehung der Spindel eingestellt werden.

Bevorzugt kann die Spindel mit einer manuell bedienbaren Kurbel oder hydraulisch, elektrisch oder auf andere Art bedient werden, die auch dann zugänglich ist, wenn die Achsenpresse unter dem Wagen positioniert ist. Die Kurbel kann dabei beispielsweise an einem äußeren Ende der Achsenpresse angeordnet sein, sodass eine Veränderung des Abstands der Achsauflagen auch dann noch möglich ist, wenn sie sich unter dem Wagen befinden.

Auch die Auszugseinheit 102 kann auf einer entsprechenden Lochschiene 381 angeordnet sein, wobei diese Lochschiene 381 dann in der Schiene 380 bewegbar ist, um eine Kraft F auf den in der Hohlachse 350 befindlichen Achsstummel 351 auszuüben. In dieser Ausführungsform umfasst die Auszugseinheit ebenfalls ein Loch oder eine Lochreihe und die Auszugseinheit kann über einen Bolzen mit der Lochschiene 381 lösbar verbunden werden, analog zu den Achsauflagen. So kann die Auszugseinheit bei Bedarf vom Rahmen gelöst werden, beispielsweise zu Reparaturzwecken oder um die Klammer auszutauschen.

Auf beiden Seiten des Rahmens 101 sind, wie dargestellt, zwei entsprechende Lochschienen 381 für die Auszugseinheit 102 angeordnet sind. Da die Auszugseinheit 102 lösbar mit einer der Lochschienen 381 verbunden ist, kann die Auszugseinheit 102 je nach Bedarf auf der einen oder der anderen Seite des Rahmens angebracht werden.

Alternativ können auch zwei Auszugseinheiten vorgesehen sein, die auf gegenüberliegenden Seiten der Achsenpresse angeordnet sind. Diese sind, wie die beschriebene Auszugseinheit 102 grundsätzlich gegenüber dem Rahmen 101 bewegbar. Es kann jedoch vorgesehen sein, dass eine der Auszugseinheiten beispielsweise mittels eines Querbolzens in der Lochschiene 381 fixiert werden kann, sodass sie als Gegenlager fungieren kann. Die andere Auszugseinheit kann dann bewegt werden, um einen Achsstummel aus der Hohlachse zu lösen oder in diese einzupressen. Soll ein Achsstummel auf der anderen Seite der Hohlachse gelöst oder eingepresst werden, kann dann der Querbolzen umgesteckt werden, sodass nun die gegenüberliegende Auszugseinheit unbeweglich ist und als Gegenlager fungiert. Die jeweils nicht mit dem Querbolzen fixierte Auszugseinheit kann dann als "aktive" Auszugseinheit genutzt werden, um Achsstummel einzupressen/zu lösen und die fixierte Auszugseinheit fungiert als "passive" Auszugseinheit im Sinne eines Gegenlagers. Es ist dann nicht mehr nötig, bei einem Wechsel von Achsstummeln auf gegenüberliegenden Seiten der Hohlachse die Position der Auszugseinheit zu verändern oder den Wagen oder die Achsenpresse zu drehen.

Figuren 4a und 4b zeigen schematisch das Positionieren der mobilen Achsenpresse unter einem Wagen 400, der beispielsweise auf Böcken 460 aufgebockt ist. Anstelle der Böcke können auch Wagenheber oder andere Einrichtungen zum Anheben des Wagens genutzt werden. Ist der Wagen mehrachsig ausgebildet, so ist ein Anheben des Wagens gegebenenfalls nicht erforderlich, sofern die minimale Unterfahrhöhe h₁ der Achsenpresse geringer ist als die Höhe h₂ des Wagens über dem Boden.

Zum Achswechsel bzw. zum Auswechseln der elastischen Lager der Achsstummel (beispielsweise Gummistränge oder Gummilager) wird, wie in Figur 4a dargestellt, die Achsenpresse zunächst unter dem Wagen 400 positioniert werden. Dabei erfolgt die Positionierung vorzugsweise derart, dass das Gegenlager (hier als zwei Achsauflagen 131, 132 dargestellt) unter der Hohlachse positioniert wird, aus der der Achsstummel gelöst oder in die der Achsstummel eingepresst werden sollen.

Vorher werden die Achsauflagen 131, 132 jedoch auf die Länge der Hohlachse (Breite des Rahmens) voreingestellt, sodass im weiteren Verlauf wenn überhaupt nur noch eine Feinabstimmung des Abstands der Achsauflagen nötig ist. Dazu werden die Achsauflagen entlang der Lochschiene 131 verschoben werden und anschließend über den Bolzen 490 mit der Lochschiene lösbar verbunden werden.

So dann wird, wie in Figur 4b gezeigt, die Höhe der Achsenpresse 100 so verändert, dass die Hohlachse auf den Achsauflagen 131, 132 zwischen den seitlichen Wangen mit den Erhebungen 233 zu liegen kommt. Dazu können die Stützen entsprechend der Fig. 1b verstellt und der Rahmen der Achsenpresse angehoben werden.

Ist die Achsenpresse so weit angehoben, dass die Erhebungen der Achsauflagen bereits etwa auf der Höhe des Rahmens sind, die Hohlachse aber noch nicht auf den Achsauflagen aufliegt, kann eine Feinabstimmung des Abstands der Achsauflagen erfolgen, sodass die Erhebungen mit dem Rahmen des Wagens in Anlage gebracht werden und die Achsenpresse möglichst spielfrei gegen den Wagen abgestützt wird. Anschließend kann die Achsenpresse weiter angehoben werden, bis die Hohlachse auf den Achsauflagen aufliegt.

Danach wird die Klammer 121 am Achsstummel 495 angesetzt, indem die Klammer zunächst geöffnet und um den Achsstummel gelegt wird. Ist die Klammer positioniert, wird sie geschlossen, sodass sie um den Achsstummel umgreift oder an geeigneter Stelle hintergreift, sodass sie bei Aufbringen der Kraft nicht vom Achstummel abrutscht. Alternativ können auch austauschbare Klammern oder eine andere Fixiereinheit vorgesehen sein, die entsprechend den Abmessungen des Achsstummels gewählt und in die Auszugseinheit 102 eingebaut werden.

Anschließend kann über die Auszugseinheit 102 hydraulisch oder elektrisch oder auf andere Art eine Kraft auf den Achsstummel 495 ausgeübt werden, sodass dieser aus der Hohlachse gelöst wird. Das Gegenlager verhindert dabei eine Bewegung der Achsenpresse in die der Kraft entgegengesetzten Richtung, sodass die Kraft auf den Achsstummel wirkt.

Ist beabsichtigt, mit der Achsenpresse 100 einen Achsstummel in die Hohlachse 470 einzupressen, so wird der Achsstummel zunächst mit der Klammer 121 verbunden und mit der Hohlachse 470 in Anlage gebracht. Dann kann eine Kraft in Längsrichtung der Hohlachse und in Richtung der Hohlachse bzw. des Wagens 400 auf den Achsstummel ausgeübt werden, um diesen in die Hohlachse einzupressen. Alternativ zur Klammer kann hierzu auch ein Anlageelement vorgesehen sein, das anstelle der Klammer mit der Auszugseinheit verbunden wird und beim Bewegen der Auszugseinheit auf die Hohlachse zu eine Kraft auf den einzupressenden Achsstummel ausüben kann. Ferner kann das Einpressen auch nur mittels der Auszugseinheit ohne Klammer oder ein zusätzliches Anlageelement erfolgen. Besonders vorteilhaft ist hier, wenn die Auszugseinheit auf der der Hohlachse zugewandten Seite eine ebene Fläche aufweist, die in Richtung der Hohlachse gegen den einzupressenden Achsstummel gedrückt werden kann.

Auch hier bewirkt das Gegenlager ein Abstützen der Achsenpresse gegen den Wagen, sodass sich die Achsenpresse nicht in eine der Kraft entgegengesetzte Richtung bewegen kann und die Kraft auf den Achsstummel zum Einpressen in die Hohlachse übertragen wird. Beim Einpressen können zusätzlich elastische Elemente mit in die Hohlachse eingepresst werden.

## Patentansprüche

1. Mobile Achsenpresse (100) zum Lösen oder Einpressen eines Achsstummels (351) aus bzw. in eine Hohlachse (350) eines Wagens (300), wie beispielsweise eines Wohnwagens oder eines Anhängers, umfassend einen unter den Wagen fahrbaren Rahmen (101) mit einer mit dem Achsstummel koppelbaren Auszugseinheit (102), die eine Kraft in Längsrichtung der Hohlachse (350) auf den Achsstummel (351) ausüben kann, um den Achsstummel in die Hohlachse einzupressen oder aus der Hohlachse zu lösen und mit einem Gegenlager (103) zum Abstützen der mobilen Achsenpresse (100) gegen den Wagen.

2. Mobile Achsenpresse (100) nach Anspruch 1, wobei die Achsenpresse einen Hydraulikzylinder zum Bewegen der Auszugseinheit (102) umfasst.

3. Mobile Achsenpresse (100) nach Anspruch 1, wobei die Achsenpresse einen elektrischen oder anderen Antrieb zum Bewegen der Auszugseinheit (102) umfasst, der über ein externes Stromnetz oder eine insbesondere auf der Achsenpresse angeordnete Batterie versorgt wird.

4. Mobile Achsenpresse (100) nach einem der Ansprüche 1 bis 3, wobei die Auszugseinheit eine Klammer zum Ansetzen an einem Achsstummel aufweist.

5. Mobile Achsenpresse (100) nach einem der Ansprüche 1 bis 4, wobei das Gegenlager (103) auf unterschiedliche Größen von Wagen anpassbar ist.

6. Mobile Achsenpresse (100) nach Anspruch 5, wobei das Gegenlager (103) einen Fixierblock und einen beweglichen Befestigungsschlitten umfasst, der beweglich gegenüber dem Fixierblock ausgebildet ist, um die Achsenpresse am Rahmen eines Wagens festzulegen.

7. Mobile Achsenpresse (100) nach Anspruch 6, wobei das Gegenlager als zwei bewegbare Achsauflagen ausgebildet ist, zwischen denen der Wagen eingespannt werden kann.

8. Mobile Achsenpresse (100) nach Anspruch 7, wobei der bewegliche Befestigungsschlitten durch einen elektrischen Antrieb antreibbar ist und der elektrische Antrieb mit einer externen Stromversorgung verbunden ist und/oder dem elektrischen Antrieb eine eigenständige Stromversorgung zugeordnet ist.

9. Mobile Achsenpresse (100) nach einem der Ansprüche 1 bis 8, wobei die mobile Achsenpresse eine Hubeinrichtung zum Anheben des Rahmens (101) umfasst.

10. Mobile Achsenpresse (100) nach einem der Ansprüche 1 bis 9, wobei eine minimale Unterfahrhöhe, mit der die mobile Achsenpresse unter einen Wagen (300) bewegt werden kann, maximal 60 cm, bevorzugt 50 cm, besonders bevorzugt weniger als 45 cm beträgt.

11. Mobile Achsenpresse (100) nach Anspruch 10, wobei die Unterfahrhöhe der mobilen Achsenpresse veränderbar ist.

12. Mobile Achsenpresse (100) nach einem der Ansprüche 1 bis 11, wobei die Auszugseinheit (102) auf einer Seite des Gegenlagers (103) angeordnet ist oder wobei die Auszugseinheit (102) an gegenüberliegenden Seiten des Gegenlagers angeordnet ist, sodass Achsstummel auf zwei Seiten einer Hohlachse eines durch das Gegenlager abgestützten Wagens in die Hohlachse eingepresst oder aus der Hohlachse gelöst werden können.

## Claims

1. A mobile axle press (100) for detaching or pressing an axle stub (351) from or into a hollow axle (350) of a vehicle (300), such as a caravan or a trailer, comprising a frame (101) that can be moved under the vehicle, with a pull-out unit (102) that can be coupled with the axle stub and that can exert a force onto the axle stub (102) in the longitudinal direction of the hollow axle (350), in order to press the axle stub into the hollow axle or detach it from it, and with a counter bearing (103) for propping the mobile axle press (100) against the vehicle.

2. The mobile axle press (100) according to claim 1, wherein the axle press comprises a hydraulic cylinder for moving the pull-out unit (102).

3. The mobile axle press (100) according to claim 1, wherein the axle press comprises an electrical or another type of drive for moving the pull-out unit (102), which his supplied through an external power grid or a battery disposed in particular on the axle press.

4. The mobile axle press (100) according to one of the claims 1 to 3, wherein the pull-out unit comprises a clamp to be positioned on the axle stub.

5. The mobile axle press (100) according to one of the claims 1 to 4, wherein the counter bearing (103) can be adjusted to different vehicle sizes.

6. The mobile axle press (100) according to one of the claims 1 to 4, wherein the counter bearing (13) comprises a fixation block and a movable fastening slide, which is designed to be movable relative to the fixation block, in order to arrange the axle press on the frame of vehicle.

7. The mobile axle press (100) according to claim 6, wherein the counter bearing is designed as two movable axle supports, between which the vehicle can be clamped.

8. The mobile axle press (100) according to claim 7, wherein the movable fastening slide can be driven by an electric drive and the electric drive is connected to an external power supply and/or a separate power supply is attributed to the electric drive.

9. The mobile axle press (100) according to one of the claims 1 to 8, wherein the mobile axle press comprises a lifting device for lifting the frame (101).

10. The mobile axle press (100) according to one of the claims 1 to 9, wherein a minimal ground clearance at which the mobile axle press can be moved under a vehicle (300) is at most 60 cm, preferably 50 cm, particularly preferably less than 45 cm.

11. The mobile axle press (100) according to claim 10, wherein the ground clearance of the mobile axle press can be modified.

12. The mobile axle press (100) according to one of the claims 1 to 11, wherein the pull-out unit (102) is disposed on one side of the counter bearing (103) or wherein the pull-out unit (102) is disposed on an opposite side of the counter bearing, so that the axle stub can be pressed into or detached from a hollow axle on two sides of the hollow axle of a vehicle supported by the counter bearing.

## Revendications

1. Presse pour essieu mobile (100) pour détacher ou presser une fusée d'essieu (351) dans un essieu creux (350) d'un véhicule (300) comme par exemple une caravane ou une remorque, comprenant un cadre (101) pouvant être roulé sous le véhicule avec une unité d'extraction (102) qui peut exercer une force sur la fusée d'essieu (351) dans la direction longitudinale de l'essieu creux (350) afin de presser la fusée d'essieu dans l'essieu creux ou de la détacher de l'essieu creux et avec un contre-appui (103) pour appuyer la presse pour essieu mobile (100) contre le véhicule.

2. Presse pour essieu mobile (100) selon la revendication 1, où la presse pour essieu comporte un cylindre hydraulique pour déplacer l'unité d'extraction (102).

3. Presse pour essieu mobile (100) selon la revendication 1, où la presse pour essieu comprend un entraînement électrique ou autre pour déplacer l'unité d'extraction (102) qui est alimenté via un réseau électrique externe ou une batterie disposée en particulier sur la presse pour essieu.

4. Presse pour essieu mobile (100) selon l'une des revendications 1 à 3, où l'unité d'extraction comprend une pince pouvant être fixée sur une fusée d'essieu.

5. Presse pour essieu mobile (100) selon l'une des revendications 1 à 4, où le contre-appui (103) peut être ajusté à différentes tailles de véhicule.

6. Presse pour essieu mobile (100) selon la revendication 5, où le contre-appui (103) comprend un bloc de fixation et un traineau de fixation mobile qui est configuré pour être mobile par rapport au bloc de fixation, pour positionner la presse pour essieu sur le cadre d'un véhicule.

7. Presse pour essieu mobile (100) selon la revendication 6, où le contre-appui est formé par deux supports d'essieu mobiles entre lesquelles le véhicule peut être serré.

8. Presse pour essieu mobile (100) selon la revendication 7, où le traîneau de fixation mobile peut être entraîné par un entraînement électrique et l'entraînement électrique est connecté à une alimentation électrique extérieure et/ou une alimentation électrique autonome est attribuée à l'entraînement électrique.

9. Presse pour essieu mobile (100) selon l'une des revendications 1 à 8, où la presse pour essieu mobile comporte un dispositif de levage pour soulever le cadre (101).

10. Presse pour essieu mobile (100) selon l'une des revendications 1 à 9, où une garde au sol minimale avec laquelle la presse pour essieu mobile peut être roulée sous un véhicule (300) est de maximum 60 cm, de préférence 50 cm, plus préférablement inférieure à 45 cm.

11. Presse pour essieu mobile (100) selon la revendication 10, où la garde au sol de la presse pour essieu mobile est modifiable.

12. Presse pour essieu mobile (100) selon l'une des revendications 1 à 11, où l'unité d'extraction (102) est disposée sur un côté du contre-essieu (103) ou bien où l'unité d'extraction (102) est disposée sur un côté opposé du contre-essieu, de sorte que les fusées d'essieu peuvent être pressée dans ou retirées de l'essieu creux d'un véhicule supporté par le contre-essieu, des deux côtés de l'essieu creux.
